# EUROPÄISCHE PATENTSCHRIFT

(11) **EP 3 316 078 B1**
(45) Veröffentlichungstag und Bekanntmachung des Hinweises auf die Patenterteilung: **08.01.2020**
(21) Anmeldenummer: 17195883.8
(22) Anmeldetag: 11.10.2017
(51) Int. Cl.: G06F 3/01, G01D 21/00, G01D 18/00

(54) **VERFAHREN ZUM BETREIBEN EINER MESSEINHEIT UND MESSEINHEIT**
METHOD OF OPERATING A MEASURING UNIT AND MEASURING UNIT
PROCÉDÉ DE FONCTIONNEMENT D'UNE UNITÉ DE MESURE ET UNITÉ DE MESURE

(30) Priorität: 31.10.2016 DE 102016120740
(43) Veröffentlichungstag der Anmeldung: 02.05.2018
(73) Patentinhaber: Krohne Messtechnik GmbH, 47058 Duisburg (DE)
(72) Erfinder: Deilmann, Michael, 45257 Essen (DE); Trapp, Thilo, 46282 Dorsten (DE)
(74) Vertreter: Gesthuysen Patent- und Rechtsanwälte

(56) Entgegenhaltungen:
- EP-A2- 0 102 939
- DE-A1-102016 103 162
- US-A1- 2015 277 572

## Beschreibung

Die Erfindung geht aus von einem Verfahren zum Betreiben einer Messeinheit, wobei die Messeinheit wenigstens eine Sensoreinheit zur Messung wenigstens eines vorzugsweise physikalischen Parameters, wenigstens einen Lagesensor und/oder einen Beschleunigungssensor und wenigstens eine Steuer- und Auswerteeinheit aufweist, wobei der Lagesensor und/oder der Beschleunigungssensor mit der Steuer- und Auswerteeinheit verbunden ist bzw. sind und wobei der Lagesensor ein Lagesignal und/oder der Beschleunigungssensor ein Beschleunigungssignal an die Steuer- und Auswerteeinheit aussendet.

Darüber hinaus geht die Erfindung aus von einer Messeinheit, umfassend wenigstens eine Sensoreinheit zur Messung wenigstens eines vorzugsweise physikalischen Parameters, wenigstens einen Lagesensor und/oder einen Beschleunigungssensor und wenigstens eine Steuer- und Auswerteeinheit, wobei der Lagesensor und/oder der Beschleunigungssensor mit der Steuer- und Auswerteeinheit verbunden ist bzw. sind.

Einfache analytische Messeinheiten, die wenigstens einen Sensor zur Messung eines physikalischen Parameters umfassen, besitzen typischerweise weder Statusanzeigen in Form von LEDs oder Displays noch Parametriermöglichkeiten über z. B. Tasten. Daher ist zur Ansteuerung der Sensoren eine Bedieneinheit, z. B. ein Transmitter oder ein Handheld erforderlich.

In jüngster Zeit werden auch diese einfachen Messeinheiten mit Elektronik ausgestattet, die die komplette Sensoransteuerung und Datenauswertung realisiert. Dabei stellt sich insbesondere die Frage, wie Prozesse, die den Betrieb der Messeinheit betreffen, wie beispielsweise eine Kalibration des Sensors, im Feld oder im Labor ausgelöst und gesteuert werden können, ohne eine komplexe Infrastruktur zu benötigen.

Aus dem Stand der Technik bekannt ist der Einsatz von Lagesensoren und/oder Beschleunigungssensoren, die eine Änderung der Lage und/oder der Beschleunigung der Messeinheit in ein messbares Lagesignal und/oder Beschleunigungssignal umwandeln. Ein solches Lagesignal und/oder Beschleunigungssignal kann sich insbesondere durch den zeitlichen Verlauf der Amplitude auszeichnen. Bekannt ist es beispielsweise, die Messeinheit durch eine Bewegung in einen bestimmten Zustand, beispielsweise in den Messbetrieb, zu versetzen.

Die Druckschrift DE 41 07 853 A1 offenbart ein elektronisches Fieberthermometer umfassend einen Beschleunigungssensor, wobei durch eine Schüttelbewegung des Fieberthermometers eine Temperaturmessung gestartet wird.

Die Druckschrift EP 0 102 939 A2 beschreibt ein elektronisches Fieberthermometer mit einem Bewegungssensor. Bei Erkennen eines einmaligen Schüttelns schaltet das Gerät auf Batteriekontrolle bzw. Kontrolle des Eichzustandes. Bei einer weiteren Schüttelbewegung schaltet das Gerät automatisch auf Temperaturmessung.

Darüber hinaus ist es aus dem Stand der Technik, beispielsweise aus der Druckschrift DE 10 2014 015 910 A1 bekannt, mobile Gasmesseinrichtungen mit einer bewegungs-, erschütterungs-, stoß-, schwingungs- oder rotationsempfindlichen Sensorik auszustatten, die eine Lageränderung der Gasmesseinrichtung detektiert und diese einem Ereignis, das der Ursache der Veränderung der Position oder der Lage der Gasmesseinrichtung entspricht, wie beispielsweise einem Sturz, zuordnet. So kann die Gasmesseinrichtung nach einem Sturz mitteilen, dass die Sensorik evtl. beschädigt ist und nicht mehr zuverlässig arbeitet. Im Ergebnis kann die Funktionssicherheit der mobilen Gasmesseinrichtung dadurch erhöht werden.

Ausgehend von dem zuvor dargelegten Stand der Technik liegt der vorliegenden Erfindung die Aufgabe zugrunde, ein Verfahren zum Betreiben einer Messeinheit anzugeben, das ein besonders einfaches Auslösen und Steuern von den Betrieb der Messeinheit betreffenden Prozessen ermöglicht und darüber hinaus ein unbeabsichtigtes Auswerten von Lage- und/oder Beschleunigungssignalen verhindert. Darüber hinaus liegt der Erfindung die Aufgabe zugrunde, eine entsprechende Messeinheit anzugeben.

Die zuvor dargelegte Aufgabe wird gemäß einer ersten Lehre der Erfindung durch ein eingangs genanntes Verfahren dadurch gelöst, dass wenigstens ein den Betrieb der Messeinheit betreffender Prozess ausgelöst wird, wenn zumindest ein Teil der Messeinheit gemäß einem ersten Bewegungsmuster bewegt wird, wobei das erste Bewegungsmuster eine Abfolge von wenigstens zwei Bewegungen umfasst und/oder dass wenigstens ein Teilprozess des Prozesses oder eines Prozesses ausgelöst wird, wenn zumindest ein Teil der Messeinheit gemäß einem zweiten Bewegungsmuster bewegt wird, wobei das zweite Bewegungsmuster wenigstens eine Bewegung umfasst. Dabei kann der durch das erste Bewegungsmuster ausgelöste Prozess wenigstens einen Teilprozess, also mehrere Prozessschritte, oder alternativ lediglich einen Prozessschritt aufweisen. Wird ein Teilprozess eines Prozesses dadurch ausgelöst, dass zumindest ein Teil der Messeinheit gemäß einem zweiten Bewegungsmuster bewegt wird, so kann der übergeordnete Prozess entweder dadurch ausgelöst worden sein, dass zumindest ein Teil der Messeinheit gemäß einem ersten Bewegungsmuster bewegt wird, alternativ kann der Prozess aber auch anderweitig ausgelöst worden sein. Eine alternative Art der Auslösung wird weiter unten beschrieben.

Erfindungsgemäß wurde erkannt, dass mit Hilfe von Bewegungen und/oder Lageänderungen und/oder Änderungen der Orientierung im Raum von zumindest einem Teil der Messeinheit sowohl ein den Betrieb der Messeinheit betreffender Prozess ausgelöst werden kann als auch ein Prozess, der mehrere Prozessschritte umfasst, dahin gehend gesteuert werden kann, dass wenigstens ein Teilprozess durch wenigstens eine Bewegung der Messeinheit ausgelöst wird. Dabei weist erfindungsgemäß das erste Bewegungsmuster zum Auslösen eines Prozesses eine Abfolge von wenigstens zwei Bewegungen auf. Damit ist sichergestellt, dass nicht unbeabsichtigt durch eine Bewegung der Messeinheit, beispielsweise durch ein versehentliches Schütteln, ein Prozess ausgelöst wird. Ist allerdings ein Prozess, der mehrere Prozessschritte, also mehrere Teilprozesse, umfasst, ausgelöst, so kann erfindungsgemäß wenigstens ein Teilprozess durch ein zweites Bewegungsmuster ausgelöst werden. Dieses zweite Bewegungsmuster umfasst wenigstens eine Bewegung der Messeinheit.

Gemäß einer Ausgestaltung kann ein Prozess oder ein Teilprozess ausgelöst werden, wenn nur ein Teil der Messeinheit bewegt wird, wobei dieser Teil den wenigstens einen Lagesensor und/oder den wenigstens einen Beschleunigungssensor umfasst. Gemäß dieser Ausgestaltung kann das Verfahren auch bei Messeinheiten angewendet werden, die aufgrund ihres Gewichts oder ihrer Dimensionen oder ihrer Anordnung im Messaufbau nicht bewegt werden können.

Ein Prozess, der, wie zuvor beschrieben, durch ein erstes Bewegungsmuster ausgelöst wird, betrifft den Betrieb der Messeinheit. Beispielsweise kann die Messeinheit in einen anderen Betriebsmodus, wie beispielsweise in einen Bereitschaftsmodus versetzt werden, wenn zumindest ein Teil der Messeinheit gemäß einem ersten Bewegungsmuster bewegt wird. Alternativ oder zusätzlich kann der Messbetrieb ausgelöst oder eine Messung gestartet werden, wenn zumindest ein Teil der Messeinheit gemäß einem ersten Bewegungsmuster bewegt wird. Wird eine Messung ausgelöst, so kann diese vorzugsweise dadurch beendet werden, dass zumindest ein Teil der Messeinheit gemäß einem zweiten Bewegungsmuster bewegt wird. Zudem kann auch ein Kalibrationsprozess ausgelöst werden, wenn zumindest ein Teil der Messeinheit gemäß einem ersten Bewegungsmuster bewegt wird. Dabei ist es besonders bevorzugt, wenn während der Kalibration einzelne Teilprozesse dadurch ausgelöst werden, dass zumindest ein Teil der Messeinheit gemäß einem zweiten Bewegungsmuster bewegt wird. Bevorzugt ist es, wenn in der Messeinheit unterschiedliche Prozesse durch verschiedene Bewegungsmuster ausgelöst werden. Dabei ist es besonders bevorzugt, wenn jedem ersten Bewegungsmuster genau ein Prozess zugeordnet ist.

Gemäß einer weiteren Ausgestaltung wird die Messeinheit durch wenigstens eine Bewegung des ersten Bewegungsmusters und/oder durch wenigstens eine Bewegung des zweiten Bewegungsmusters in einen Zustand gebracht, in dem die Steuer- und Auswerteeinheit auf weitere Lagesignale und/oder Beschleunigungssignale achtet. Diese Ausgestaltung weist den Vorteil auf, dass nicht jede unbeabsichtigte Bewegung der Messeinrichtung durch die Steuer- und Auswerteeinheit registriert und ausgewertet wird.

Gemäß einer weiteren vorteilhaften Ausgestaltung des erfindungsgemäßen Verfahrens wird eine Bewegung der Messeinheit durch ein Schütteln, eine Vibration, eine Rotation, vorzugsweise um einen Winkel von 90° und/oder von 180° und/oder von 270°, oder ein Schwenken des Sensors ausgeführt. Daneben sind auch alle weiteren denkbaren Bewegungen der Messeinheit geeignet, um einen Prozess oder einen Teilprozess auszulösen.

Ein erstes Bewegungsmuster entspricht beispielsweise einer der folgenden Bewegungsabfolgen:
"Schütteln - Pause - Schütteln" oder "Schütteln - Drehung um 180° - Schütteln" oder "Drehung um 90° - Schütteln - Drehung um 90°". Jede Bewegungsfolge, die sich von einer zufälligen Bewegung der Messeinheit unterscheidet, ist im Rahmen der vorliegenden Betrachtung ebenfalls geeignet, um einen Prozess auszulösen.

Gemäß einer nächsten Ausgestaltung umfasst das erste Bewegungsmuster und/oder das zweite Bewegungsmuster wenigstens zwei gleiche Bewegungen und/oder wenigstens zwei unterschiedliche Bewegungen.

Besonders bevorzugt ist der durch das erste Bewegungsmuster ausgelöste Prozess eine Routine zur Kalibrierung der Sensoreinheit. Ist die Sensoreinheit beispielsweise ein pH-Sensor, so umfasst die Routine zur Kalibration des pH-Sensors vorzugsweise die Verfahrensschritte Kalibrieren mit einer ersten Pufferlösung, Signalisierung, Kalibrieren mit einer zweiten Pufferlösung, Signalisierung, optional Kalibrieren mit einer dritten Pufferlösung, Beenden der Kalibrierung und Rückgang zum Messbetrieb. Dabei weisen die einzelnen Pufferlösungen jeweils unterschiedliche, bekannte pH-Werte auf. Die Kalibration mit der ersten Pufferlösung legt den Nullpunkt der Messeinheit fest, wobei die Pufferlösung vorzugsweise den pH-Wert 7 aufweist. Durch die Kalibration mit einer zweiten Pufferlösung wird die Steilheit festgelegt, wobei die zweite Pufferlösung beispielsweise den pH-Wert 2 oder den pH-Wert 4 aufweist.

Erfindungsgemäß weist die Messeinheit wenigstens eine Schnittstelle zur Aufnahme eines Steckmoduls und ein Steckmodul auf, wobei vorzugsweise der Lagesensor und/oder der Beschleunigungssensor in dem Steckmodul angeordnet ist bzw. sind.

Erfindungsgemäß weist das Steckmodul ein Erkennungselement zur Kennzeichnung des Einsteckzustandes, insbesondere einen elektrischen Widerstand, einen Datenspeicher oder einen RFID-Chip auf, wobei die Steuer- und Auswerteeinheit erst bei erkanntem Einsteckzustand sensibel für Lagesignale und/oder für Beschleunigungssignale ist.

Besonders bevorzugt wird wenigstens ein Prozess umfassend wenigstens einen Teilprozess durch ein Einstecken des Steckmoduls in die Schnittstelle ausgelöst und es wird wenigstens ein Teilprozess dadurch ausgelöst, dass zumindest ein Teil der Messeinheit gemäß einem zweiten Bewegungsmuster bewegt wird. Dabei wird das Steckmodul durch das Einstecken in die Schnittstelle mit der Steuer- und Auswerteeinheit verbunden. Diese Ausgestaltung verbessert das Verfahren insofern, als dass ein unbeabsichtigtes Auslösen eines Prozesses quasi ausgeschlossen ist.

Vorteilhaft ist es, wenn das Steckmodul eine Anzeige zur Ausgabe von Informationen bezüglich des Prozesses und/oder des Teilprozesses und/oder des Status der Sensoreinheit aufweist, wobei insbesondere das Ergebnis eines Prozesses und der Status der Sensoreinheit ausgegeben werden, und wobei nach dem Prozess, jedoch vor dem Wechsel des Betriebsmodus die Ergebnis- und die Status-Anzeige im Wechsel durchlaufend angezeigt werden, bis der Betriebsmodus gewechselt wird.

Gemäß einer weiteren bevorzugten Ausgestaltung gibt die Messeinheit, insbesondere die Sensoreinheit, ein Feedbacksignal, insbesondere ein optisches Signal und/oder akustisches Signal und/oder ein Vibrationssignal, aus, wenn ein Prozess und/oder ein Teilprozess ausgelöst und/oder beendet wird. Gemäß dieser Ausgestaltung wird der Nutzer zusätzlich darüber informiert, dass ein Prozess oder ein Teilprozess ausgelöst und/oder beendet wird, wodurch die Zuverlässigkeit der Messeinheit weiter erhöht werden kann.

Besonders bevorzugt gibt die Messeinheit nur dann ein Feedbacksignal aus, wenn ein Prozess und/oder ein Teilprozess erfolgreich beendet wird. Alternativ kann die Messeinheit, insbesondere die Sensoreinheit ein Feedbacksignal ausgeben, wenn ein Prozess und/oder ein Teilprozess ausgelöst und/oder beendet wird und weiterhin ein zusätzliches Feedbacksignal, wenn ein Prozess und/oder ein Teilprozess erfolgreich beendet wird, wobei sich das zusätzliche Feedbacksignal von dem Feedbacksignal zum Auslösen und/oder Beenden eines Prozesses und/oder Teilprozesses unterscheidet.

Gemäß einer nächsten vorteilhaften Ausgestaltung ist in der Steuer- und Auswerteeinheit eine Vielzahl von Lagesignalen und/oder Beschleunigungssignalen hinterlegt, wobei eine erste Anzahl von Lagesignalen und/oder Beschleunigungssignalen Vergleichssignale für Bewegungsabfolgen gemäß dem ersten Bewegungsmuster sind und wobei eine zweite Anzahl von Lage- und/oder Beschleunigungssignalen Vergleichssignale für Bewegungen gemäß dem zweiten Bewegungsmuster sind, wobei jedem Vergleichssignal ein Prozess oder Teilprozess zugeordnet ist, wobei das von dem Lagesensor ausgesendete Lagesignal und/oder das von dem Beschleunigungssensor ausgesendete Beschleunigungssignal mit den in der Steuer- und Auswerteeinheit hinterlegten Vergleichssignalen verglichen wird, und wobei aufgrund dieses Vergleichs ein Prozess oder Teilprozess ausgelöst wird.

Dabei kann ein Vergleichssignal entweder ein einziges Lagesignal und/oder Beschleunigungssignal oder eine Abfolge von Lagesignalen und/oder Beschleunigungssignalen aufweisen. Die einzelnen Vergleichssignale bilden damit ebenfalls Vergleichsmuster, die einem Prozess und/oder Teilprozess zugeordnet sind. Gemäß dieser Ausgestaltung kann eine Vielzahl von Prozessen und Teilprozessen der Messeinheit über Bewegungen bzw. Bewegungsabfolgen der Messeinheit gesteuert werden.

Gemäß einer zweiten Lehre der vorliegenden Erfindung wird die eingangs genannte Aufgabe durch eine eingangs genannte Messeinheit dadurch gelöst, dass die Steuer- und Auswerteeinheit derart ausgestaltet ist, dass, sofern wenigstens ein Teil der Messeinheit gemäß einem ersten Bewegungsmuster bewegt wird, die Steuer- und Auswerteeinheit einen Prozess auslöst, und/oder dass, sofern wenigstens ein Teil der Messeinheit gemäß einem zweiten Bewegungsmuster bewegt wird, die Steuer- und Auswerteeinheit einen Teilprozess auslöst. Dabei umfasst das erste Bewegungsmuster eine Abfolge von wenigstens zwei Bewegungen und das zweite Bewegungsmuster umfasst wenigstens eine Bewegung.

Erfindungsgemäß weist die Messeinheit eine Schnittstelle zur Aufnahme eines Steckmoduls und ein Steckmodul auf. Gemäß einer weiteren bevorzugten Ausgestaltung ist bzw. sind der Lagesensor und/oder der Beschleunigungssensor in dem Steckmodul angeordnet.

Erfindungsgemäß wertet die Steuer- und Auswerteeinheit aus, ob das Steckmodul in die Schnittstelle eingesetzt ist und wertet erst bei erkanntem Einsteckzustand das Lagesignal und/oder das Beschleunigungssignal aus.

Dazu weist das Steckmodul ein Erkennungselement zur Kennzeichnung des Einsteckzustandes, insbesondere einen elektrischen Widerstand einen Datenspeicher oder einen RFID-Chip, auf.

Gemäß einer weiteren Ausgestaltung ist die Steuer- und Auswerteeinheit derart ausgestaltet, dass sie automatisch einen den Betrieb der Messeinheit betreffenden Prozess auslöst, wenn das Steckmodul über die Schnittstelle mit der Steuer- und Auswerteeinheit verbunden ist und dass, sofern wenigstens ein Teil der Messeinheit gemäß einem zweiten Bewegungsmuster bewegt wird, die Steuer- und Auswerteeinheit einen Teilprozess des Prozesses auslöst.

Gemäß einer weiteren Ausgestaltung der erfindungsgemäßen Messeinheit führt die Messeinheit im Betrieb eines der oben beschriebenen Verfahren aus.

Gemäß einer weiteren Ausgestaltung ist die Sensoreinheit als pH-Sensor oder als Temperatursensor oder als Leitfähigkeitssensor oder als Wärmeleitfähigkeitssensor oder als Gassensor, insbesondere als chemischer Sensor, oder als Feuchtemesssensor oder als Kombination zweier oder mehrerer der zuvor genannten Sensoren ausgestaltet.

Gemäß einer weiteren Ausgestaltung weist die Sensoreinheit einen Status auf. Besonders bevozugt weist das Steckmodul eine Anzeige zur Ausgabe von Informationen bezüglich des Prozesses und/oder des Teilprozesses und/oder des Status der Sensoreinheit auf. Ist die Sensoreinheit als pH-Sensor ausgestaltet und wird durch die Verbindung des Steckmoduls mit der Steuer- und Auswerteeinheit ein Kalibrationsprozess ausgelöst, so können beispielsweise folgende einzelnen Prozessschritte bzw. Informationen bezüglich des Sensorstatus ausgegeben werden.

Während des Kalibrationsvorgangs können folgende Informationen ausgegeben werden:
- Kalibrationsmodus
- Puffer 1
- Pufferlösung wechseln
- Puffer 2
- Kalibration OK
- Kalibration nicht OK

Nach dem Kalibrationsvorgang können als Kalibrationsergebnis folgende Informationen ausgegeben werden:
- Steigung
- Nullpunkt

Zudem können Informationen bezüglich des Sensorstatus ausgegeben werden:
- Gut
- Wartung erforderlich
- Sensor austauschen

Darüber hinaus kann über die Anzeige eine Bewertung ausgegeben werden, ob die Kalibration gut oder weniger gut oder gerade noch brauchbar war.

Vorzugsweise weist das Steckmodul einen integrierten Akku auf, der über eine Mikro-USB-Verbindung oder induktiv in einer Ladestation aufgeladen werden kann. Besonders bevorzugt ist eine Akkuanzeige vorgesehen, die nach dem Einstecken des Steckmoduls in die Schnittstelle eine Statusanzeige zum Ladestatus gibt.

Im Einzelnen gibt es nun eine Vielzahl von Möglichkeiten, das erfindungsgemäße Verfahren und die erfindungsgemäße Messeinheit auszugestalten und weiterzubilden. Dazu wird verwiesen sowohl auf die den unabhängigen Patentansprüchen nachgeordneten Patentansprüche als auch auf die nachfolgende Beschreibung von bevorzugten Ausführungsbeispielen in Verbindung mit der Zeichnung. In der Zeichnung zeigen
- Fig. 1: ein erstes Ausführungsbeispiel einer erfindungsgemäßen Messeinheit,
- Fig. 2: ein zweites Ausführungsbeispiel einer erfindungsgemäßen Messeinheit,
- Fig. 3: ein erstes Ausführungsbeispiel eines erfindungsgemäßen Verfahrens,
- Fig. 4: ein zweites Ausführungsbeispiel eines erfindungsgemäßen Verfahrens und
- Fig. 5: ein drittes Ausführungsbeispiel eines erfindungsgemäßen Verfahrens.

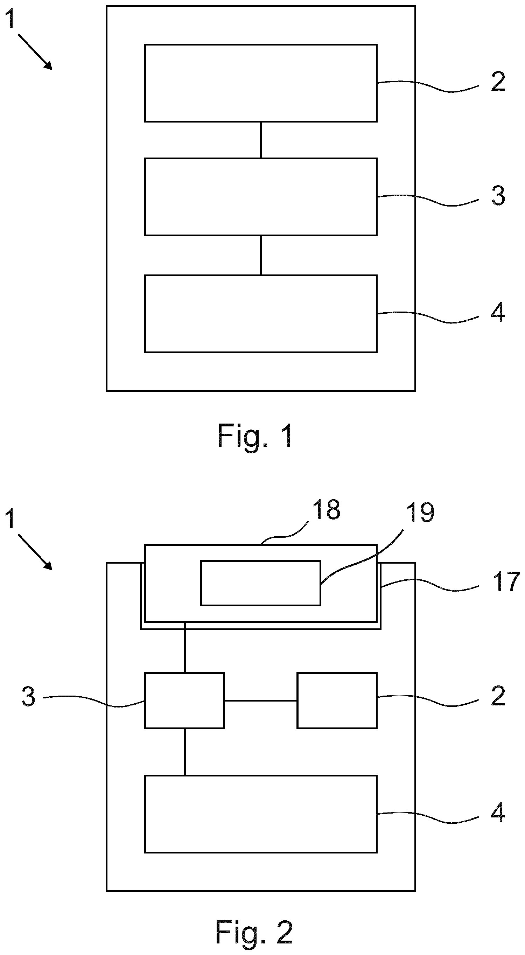

In Fig. 1 ist dargestellt ein erstes Ausführungsbeispiel einer Messeinheit 1 umfassend einen pH-Sensor 4, einen Lagesensor 2 und eine Steuer- und Auswerteeinheit 3, wobei der Lagesensor 2 mit der Steuer- und Auswerteeinheit 3 verbunden ist. Die Steuer- und Auswerteeinheit 3 ist derart ausgestaltet, dass, sofern wenigstens ein Teil der Messeinheit 1 gemäß einem ersten Bewegungsmuster bewegt wird, die Steuer- und Auswerteeinheit 3 einen Prozess auslöst, und dass, sofern wenigstens ein Teil der Messeinheit 1 gemäß einem zweiten Bewegungsmuster bewegt wird, die Steuer- und Auswerteeinheit 3 einen Teilprozess auslöst. Dazu ist die Steuer- und Auswerteinheit 3 ebenfalls mit dem pH-Sensor 4 verbunden. Die dargestellte Messeinheit 1 weist den Vorteil auf, dass Prozesse, die den Betrieb der Messeinheit 1 betreffen besonders einfach durch ein definiertes Bewegen der Messeinheit 1 ausgelöst und gesteuert werden können.

Fig. 2 zeigt ein zweites Ausführungsbeispiel einer Messeinheit 1 umfassend einen pH-Sensor 4, einen Lagesensor 2 und eine Steuer- und Auswerteeinheit 3, wobei der Lagesensor 2 mit der Steuer- und Auswerteeinheit 3 verbunden ist. Zudem weist die dargestellte Messeinheit eine Schnittstelle 17 zur Aufnahme eines Steckmoduls 18 auf. Mit der Schnittstelle 17 ist in dem dargestellten Ausführungsbeispiel ein Steckmodul 18 verbunden, wobei das Steckmodul 18 eine Anzeige 19 zur Ausgabe von Informationen bezüglich des Prozesses und des Status des pH-Sensors 4 aufweist.

Die Steuer- und Auswerteeinheit 3 ist derart ausgestaltet, dass, sofern die Steuer- und Auswerteinheit 3 über die Schnittstelle 17 mit dem Steckmodul 18 verbunden ist, die Steuer- und Auswerteeinheit 3 einen Prozess auslöst, und dass, sofern die Messeinheit 1 gemäß einem zweiten Bewegungsmuster bewegt wird, die Steuer- und Auswerteeinheit 3 einen Teilprozess auslöst. Dazu ist die Steuer- und Auswerteinheit 3 ebenfalls mit dem pH-Sensor 4 verbunden.

Alternativ kann der Lagesensor 2 auch in dem Steckmodul 18 angeordnet sein.

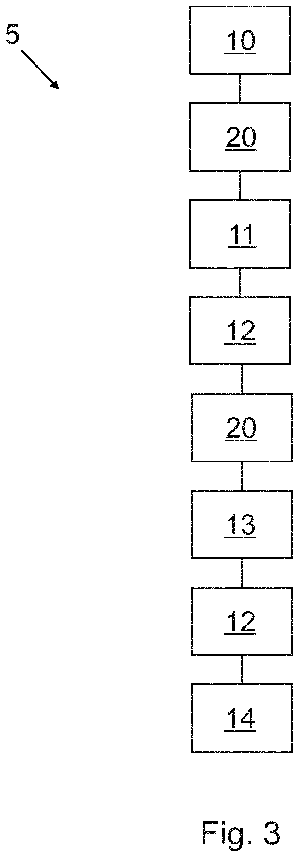

Fig. 3 zeigt ein erstes Ausführungsbeispiel eines erfindungsgemäßen Verfahrens 5 zum Betreiben einer Messeinheit 1, wobei die Messeinheit 1 eine Sensoreinheit zur Messung eines Parameters, einen Lagesensor 2 und einen Beschleunigungssensor und eine Steuer- und Auswerteeinheit 3 aufweist, wobei der Lagesensor 2 und der Beschleunigungssensor mit der Steuer- und Auswerteeinheit 3 verbunden sind und wobei der Lagesensor 2 und der Beschleunigungssensor ein Lagesignal bzw. ein Beschleunigungssignal an die Steuer- und Auswerteeinheit 3 aussenden. Zudem sind in der Steuer- und Auswerteeinheit 3 Vergleichssignale hinterlegt, wobei jedem Vergleichssignal ein Prozess oder ein Teilprozess zugeordnet ist.

In einem ersten Schritt 10 wird die Messeinheit 1 gemäß einem ersten Bewegungsmuster bewegt. Der Lagesensor 2 und der Beschleunigungssensor senden daraufhin ein Lagesignal und ein Beschleunigungssignal an die Ansteuer- und Auswerteeinheit 3. In der Ansteuer- und Auswerteeinheit werden das Lagesignal und das Beschleunigungssignal mit den Vergleichssignalen verglichen 20. Basierend auf diesem Vergleich wird in der Messeinheit 1 ein dem Bewegungsmuster zugeordneter Prozess ausgelöst 11. Im dargestellten Ausführungsbeispiel weist der ausgelöste Prozess mehrere Schritte und insofern wenigstens einen Teilprozess auf. Wird die Messeinheit 1 in einem nächsten Schritt 12 gemäß einem zweiten Bewegungsmuster bewegt, wird nach einem Vergleich mit Vergleichssignalen 20 ein Teilprozess ausgelöst 13. Zum Beenden 14 des Prozesses wird die Messeinheit 1 erneut gemäß einem zweiten Bewegungsmuster bewegt 12.

Dieses Verfahren 5 weist den Vorteil auf, dass den Betrieb der Messeinheit 1 betreffende Prozesse besonders einfach durch ein Bewegen der Messeinheit 1 ausgelöst und gesteuert werden können.

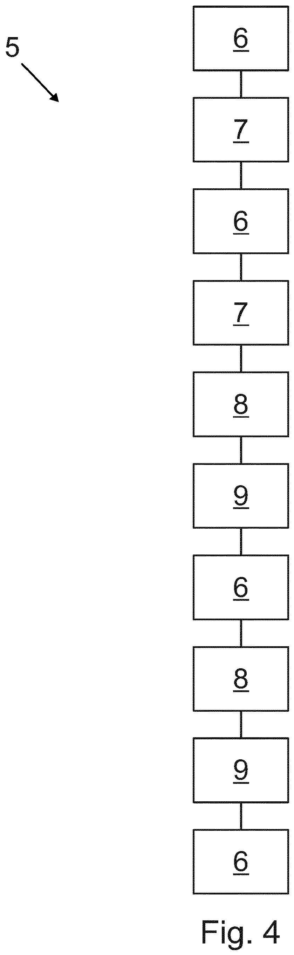

Fig. 4 zeigt ein zweites Ausführungsbeispiel eines Verfahrens 5 zum Betreiben einer Messeinheit 1, wobei die Messeinheit 1 wenigstens einen pH-Sensor 4 zur Messung des pH-Wertes einer Flüssigkeit, wenigstens einen Lagesensor 2 und wenigstens eine Steuer- und Auswerteeinheit 3 aufweist, wobei der Lagesensor 2 mit der Steuer- und Auswerteeinheit 3 verbunden ist und wobei der Lagesensor 2 ein Lagesignal an die Steuer- und Auswerteeinheit 3 aussendet.

Im dargestellten Ausführungsbeispiel wird ein Kalibrationsprozess ausgelöst, wenn die Messeinheit 1 gemäß einem definierten ersten Bewegungsmuster bewegt wird, und es werden während der Kalibration verschiedene Teilprozesse ausgelöst, wenn die Messeinheit 1 gemäß einem zweiten definierten Bewegungsmuster bewegt wird.

Dazu wird die Messeinheit 1 in einem ersten Schritt 6 geschüttelt, wodurch die Messeinheit aktiviert wird. In einem anschließenden Schritt 7 wird die Messeinheit 1 um 180° gedreht. Danach wird die Messeinheit 1 erneut geschüttelt 6, um die Kalibrierung zu starten. In einem nächsten Schritt 7 wird die Messeinheit 1 erneut um 180° gedreht. Der pH-Sensor 4 wird nun in erste Pufferlösung mit einem ersten pH-Wert getaucht. Zur Signalisierung 8 wird der pH-Wert der Pufferlösung gemessen und, sofern der gemessene Wert von dem bekannten pH-Wert der ersten Pufferlösung abweicht, wird der gemessene Wert im Sensor korrigiert. Der pH-Sensor gibt dem Nutzer in einem nächsten Schritt 9 eine Feedbacksignal in Form eines optischen oder akustischen Signals, wenn die Kalibrierung erfolgreich war. Nach der Kalibration in der ersten Pufferlösung wird die Messeinheit 1 erneut geschüttelt 6 und in eine zweite Pufferlösung getaucht, wobei der pH-Wert der zweiten Pufferlösung von dem pH-Wert der ersten Pufferlösung abweicht. Zur anschließenden Signalisierung 8 wird der pH-Wert der zweiten Pufferlösung gemessen, und sofern der gemessene Wert von dem bekannten pH-Wert der zweiten Pufferlösung abweicht, wird der gemessene Wert korrigiert. Das Aussenden 9 eines Feedbacksignals informiert den Nutzer darüber, dass die Kalibration erfolgreich war. Durch ein anschließenden Schütteln 6 wird der pH-Sensor wieder in der Messbetrieb versetzt.

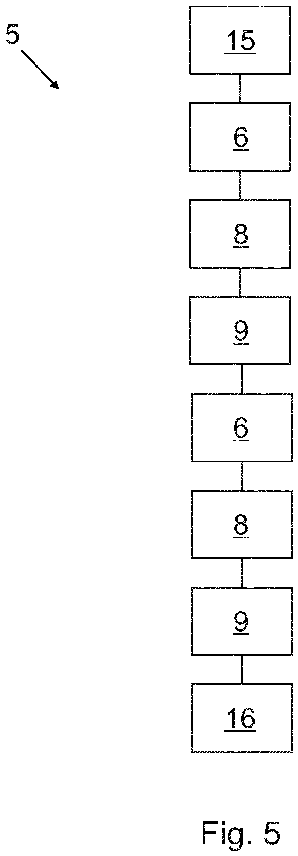

Fig. 5 zeigt ein drittes Ausführungsbeispiel eines Verfahrens 5 zum Betreiben einer Messeinheit 1, wobei die Messeinheit 1 einen pH-Sensor 4 zur Messung des pH-Wertes einer Flüssigkeit, einen Lagesensor 2 und eine Steuer- und Auswerteeinheit 3 aufweist, wobei der Lagesensor 2 mit der Steuer- und Auswerteeinheit 3 verbunden ist und wobei der Lagesensor 2 ein Lagesignal an die Steuer- und Auswerteeinheit 3 aussendet. Darüber hinaus weist die Messeinheit 1 eine Schnittstelle 17 zur Aufnahme eines Steckmoduls 18 auf, wobei das Steckmodul 18 eine Anzeige 19 aufweist, über die Informationen bezüglich des Prozesses und/oder des Teilprozesses und des Status des pH-Sensors angezeigt werden.

In einem ersten Schritt 15 des Verfahrens wird das Steckmodul 18 über die Schnittstelle 17 mit der Steuer- und Auswerteeinheit 3 verbunden, wodurch der Kalibriermodus in der Messeinheit 1, im Detail im pH-Sensor 4 ausgelöst wird. Durch ein erstes Schütteln 6 wird die Kalibrierung in der ersten Pufferlösung ausgelöst, wobei die Kalibrierung die Schritte Signalisierung 8 und Aussenden 9 eines Feedbacksignals umfasst. Durch ein anschließendes zweites Schütteln wird die Kalibration in einer zweiten Pufferlösung ausgelöst, die ebenfalls die Schritte Signalisierung 8 und Aussenden 9 eines Feedbacksignals umfasst. Abschließend gibt das Steckmodul über die Anzeige eine Bewertung aus 16, ob die Kalibrierung gut, weniger gut oder gerade noch brauchbar war.

### Bezugszeichen

- 1: Messeinheit
- 2: Lagesensor
- 3: Steuer- und Auswerteeinheit
- 4: pH-Sensor
- 5: Verfahren zum Betreiben einer Messeinheit
- 6: Schütteln der Messeinheit
- 7: Drehung der Messeinheit um 180°
- 8: Signalisierung
- 9: Aussenden eines Feedbacksignals
- 10: Bewegung der Messeinheit gemäß einem ersten Bewegungsmuster
- 11: Auslösen eines Prozesses
- 12: Bewegung der Messeinheit gemäß einem zweiten Bewegungsmuster
- 13: Auslösen eines Teilprozesses
- 14: Beenden des Prozesses
- 15: Verbinden des Steckmoduls mit der Schnittstelle
- 16: Bewertung der Kalibration durch das Steckmodul
- 17: Schnittstelle
- 18: Steckmodul
- 19: Anzeige
- 20: Vergleich des Lagesignals und des Beschleunigungssignals mit Vergleichssignalen

## Patentansprüche

1. Verfahren (5) zum Betreiben einer Messeinheit (1), wobei die Messeinheit (1) wenigstens eine Sensoreinheit zur Messung wenigstens eines Parameters, wenigstens einen Lagesensor (2) und/oder einen Beschleunigungssensor und wenigstens eine Steuer- und Auswerteeinheit (3) aufweist, wobei der Lagesensor und/oder der Beschleunigungssensor mit der Steuer- und Auswerteeinheit (3) verbunden ist und wobei der Lagesensor (2) ein Lagesignal und/oder der Beschleunigungssensor ein Beschleunigungssignal an die Steuer- und Auswerteeinheit (3) aussendet, wobei wenigstens ein den Betrieb der Messeinheit (1) betreffender Prozess ausgelöst wird (11), wenn zumindest ein Teil der Messeinheit (1) gemäß einem ersten Bewegungsmuster bewegt wird (10), wobei das erste Bewegungsmuster eine Abfolge von wenigstens zwei Bewegungen umfasst und wobei wenigstens ein Teilprozess des Prozesses oder eines Prozesses ausgelöst wird (13), wenn zumindest ein Teil der Messeinheit (1) gemäß einem zweiten Bewegungsmuster bewegt wird (12), wobei das zweite Bewegungsmuster wenigstes eine Bewegung umfasst und wobei die Messeinheit (1) eine Schnittstelle (17) zur Aufnahme eines Steckmoduls (18) und ein Steckmodul (18) aufweist, wobei das Steckmodul (18) ein Erkennungselement zur Kennzeichnung des Einsteckzustandes aufweist, wobei die Steuer- und Auswerteeinheit (3) erst bei erkanntem Einsteckzustand sensibel für Lagesignale und/oder für Beschleunigungssignale ist.

2. Verfahren (5) nach Anspruch 1, **dadurch gekennzeichnet, dass** die Messeinheit (1) durch wenigstens eine Bewegung in einen Zustand gebracht wird, in dem die Steuer- und Auswerteeinheit (3) auf weitere Lagesignale und/oder auf weitere Beschleunigungssignale achtet.

3. Verfahren (5) nach einem der Ansprüche 1 oder 2, **dadurch gekennzeichnet, dass** eine Bewegung von zumindest einem Teil der Messeinheit (1) durch ein Schütteln (6), eine Vibration, eine Rotation, vorzugsweise um einen Winkel von 90° und/oder von 180° (7) und/oder von 270°, oder ein Schwenken ausgeführt wird.

4. Verfahren (5) nach einem der Ansprüche 1 bis 3, **dadurch gekennzeichnet, dass** der durch das erste Bewegungsmuster ausgelöste Prozess eine Routine zur Kalibrierung der Sensoreinheit ist.

5. Verfahren (5) nach einem der Ansprüche 1 bis 4, **dadurch gekennzeichnet, dass** der Lagesensor und/oder der Beschleunigungssensor in dem Steckmodul (18) angeordnet ist bzw. sind.

6. Verfahren (5) nach einem der Ansprüche 1 bis 5, **dadurch gekennzeichnet, dass** das Steckmodul (18) als Erkennungselement zur Kennzeichnung des Einsteckzustandes einen elektrischen Widerstand, einen Datenspeicher oder einen RFID-Chip aufweist.

7. Verfahren (5) nach Anspruch 5 oder 6, **dadurch gekennzeichnet, dass** wenigstens ein Prozess umfassend wenigstens einen Teilprozess durch ein Einstecken des Steckmoduls (18) in die Schnittstelle (17) ausgelöst wird und dass wenigstens ein Teilprozess dadurch ausgelöst wird, dass zumindest ein Teil der Messeinheit (1) gemäß einem zweiten Bewegungsmuster bewegt wird.

8. Verfahren (5) nach einem der Ansprüche 1 bis 7, **dadurch gekennzeichnet, dass** die Messeinheit (1), insbesondere die Sensoreinheit, ein Feedbacksignal, insbesondere ein optisches und/oder akustisches und/oder ein Vibrationssignal, ausgibt, wenn ein Prozess und/oder ein Teilprozess ausgelöst und/oder beendet wird.

9. Verfahren (5) nach einem der Ansprüche 1 bis 8, **dadurch gekennzeichnet, dass** in der Steuer- und Auswerteeinheit (3) eine Vielzahl von Lagesignalen und/oder Beschleunigungssignalen hinterlegt ist, wobei eine erste Anzahl von Lagesignalen und/oder Beschleunigungssignalen Vergleichssignale für Bewegungsabfolgen gemäß dem ersten Bewegungsmuster sind und wobei eine zweite Anzahl von Lagesignalen und/oder Beschleunigungssignalen Vergleichssignale für Bewegungen gemäß dem zweiten Bewegungsmuster sind, wobei jedem Vergleichssignal ein Prozess oder Teilprozess zugeordnet ist, wobei das von dem Lagesensor (2) ausgesendete Lagesignal und/oder das von dem Beschleunigungssensor ausgesendete Beschleunigungssignal mit den in der Steuer- und Auswerteeinheit (3) hinterlegten Vergleichssignalen verglichen wird, und wobei aufgrund dieses Vergleichs ein Prozess oder Teilprozess in der Messeinheit (1) ausgelöst wird.

10. Messeinheit (1), umfassend wenigstens eine Sensoreinheit zur Messung wenigstens eines Parameters, wenigstens einen Lagesensor (2) und/oder einen Beschleunigungssensor und wenigstens eine Steuer- und Auswerteeinheit (3), wobei der Lagesensor (2) und/oder der Beschleunigungssensor mit der Steuer- und Auswerteeinheit (3) verbunden ist bzw. sind, wobei die Steuer- und Auswerteeinheit (3) derart ausgestaltet ist, dass, sofern wenigstens ein Teil der Messeinheit (1) gemäß einem ersten Bewegungsmuster bewegt wird, die Steuer- und Auswerteeinheit (3) einen Prozess auslöst, und dass, sofern wenigstens ein Teil der Messeinheit (1) gemäß einem zweiten Bewegungsmuster bewegt wird, die Steuer- und Auswerteeinheit (3) einen Teilprozess auslöst, wobei die Messeinheit (1) eine Schnittstelle (17) zur Aufnahme eines Steckmoduls (18) und ein Steckmodul (18) aufweist, wobei die Steuer- und Auswerteeinheit (3) auswertet, ob das Steckmodul (18) in die Schnittstelle (17) eingesetzt ist und erst bei erkanntem Einsteckzustand das Lagesignal und/oder das Beschleunigungssignal auswertet und wobei das Steckmodul (18) ein Erkennungselement zur Kennzeichnung des Einsteckzustandes aufweist.

11. Messeinheit (1) nach Anspruch 10, **dadurch gekennzeichnet, dass** der Lagesensor (2) und/oder der Beschleunigungssensor in dem Steckmodul (18) angeordnet ist bzw. sind.

12. Messeinheit (1) nach Anspruch 10 oder 11, **dadurch gekennzeichnet, dass** das Steckmodul (18) als Erkennungselement zur Kennzeichnung des Einsteckzustandes einen elektrischen Widerstand, einen Datenspeicher oder einen RFID-Chip aufweist.

13. Messeinheit (1) nach einem der Ansprüche 10 bis 12, **dadurch gekennzeichnet, dass** die Messeinheit (1) im Betrieb ein Verfahren (5) gemäß einem der Ansprüche 1 bis 9 ausführt.

## Claims

1. Method (5) for operating a measuring unit (1), wherein the measuring unit (1) has at least one sensor unit for measuring at least one parameter, at least a position sensor (2) and/or an acceleration sensor, and at least a control and evaluation unit (3), wherein the position sensor and/or the acceleration sensor is/are connected to the control and evaluation unit (3), and wherein the position sensor (2) emits a position signal and/or the acceleration sensor emits an acceleration signal to the control and evaluation unit (3),
wherein at least one process relevant to the operation of the measuring unit (1) is triggered (11) when at least one part of the measuring unit (1) is moved (10) according to a first movement pattern, wherein the first movement pattern comprises a sequence of at least two movements and wherein at least a partial process of the process or a process is triggered (13) when at least one part of the measuring unit (1) is moved (12) according to a second movement pattern, wherein the second movement pattern comprises at least one movement and
wherein the measuring unit (1) has a plug-in module (18) and an interface (17) for receiving a plug-in module (18), wherein the plug-in module (18) has a recognition element for identifying the plug-in state, wherein the control and evaluation unit (3) is only sensitive to position signals and/or to acceleration signals when the plug-in state has been detected.

2. Method (5) according to claim 1, **characterized in that** the measuring unit (1) is put into a state, by at least one movement, in which the control and evaluation unit (3) looks for further position signals and/or for further acceleration signals.

3. Method (5) according to claim 1 or 2, **characterized in that** a movement of at least one part of the measuring unit (1) is carried out by shaking (6), a vibration, a rotation, preferably by an angle of 90° and/or of 180° (7) and/or of 270°, or pivoting.

4. Method (5) according to any one of claims 1 to 3, **characterized in that** the process triggered by the first movement pattern is a routine for calibrating the sensor unit.

5. Method (5) according to any one of claims 1 to 4, **characterized in that** the position sensor and/or the acceleration sensor is or are arranged in the plug-in module (18).

6. Method (5) according to any one of claims 1 to 5, **characterized in that** the plug-in module (18) has an an electrical resistance, a data storage or an RFID chip as a recognition element for identifying the plug-in state.

7. Method (5) according to claim 5 or 6, **characterized in that** at least one process comprising at least one partial process is triggered by plugging the plug-in module (18) into the interface (17) and that at least a partial process is triggered **in that** at least a part of the measuring unit (1) is moved according to a second movement pattern.

8. Method (5) according to any one of claims 1 to 7, **characterized in that** the measuring unit (1), in particular the sensor unit, emits a feedback signal, in particular an optical and/or acoustic and/or vibration signal when a process and/or a partial process is triggered and/or terminated.

9. Method (5) according to any one of claims 1 to 8, **characterized in that** a plurality of location signals and/or acceleration signals are stored in the control and evaluation unit (3), wherein a first number of position signals and/or acceleration signals are comparison signals for movement sequences according to the first movement pattern, and wherein a second number of position signals and/or acceleration signals are comparison signals for movements according to the second movement pattern, wherein a process or partial process is assigned to each comparison signal, wherein the position signal emitted by the position sensor (2) and/or the acceleration signal emitted by the acceleration sensor is/are compared with the comparison signals stored in the control and evaluation unit (3), and wherein a process or partial process is triggered in the measuring unit (1) based on this comparison.

10. Measuring unit (1), comprising at least a sensor unit for measuring at least one parameter, at least a position sensor (2) and/or an acceleration sensor and at least a control and evaluation unit (3), wherein the position sensor (2) and/or the acceleration sensor is/are connected to the control and evaluation unit (3),
wherein the control and evaluation unit (3) is designed such that, provided that at least a part of the measuring unit (1) is moved according to a first movement pattern, the control and evaluation unit (3) triggers a process, and that, provided that at least one part of the measuring unit (1) is moved according to a second movement pattern, the control and evaluation unit (3) triggers a partial process,
wherein the measuring unit (1) has an interface (17) for receiving a plug-in module (18) and a plug-in module (18),
wherein the control and evaluation unit (3) evaluates whether the plug-in module (18) is inserted into the interface (17) and evaluates the position signal and/or the acceleration signal only when the plug-in state is detected, and
wherein the plug-in module (18) has a recognition element for identifying the plug-in state.

11. Measuring unit (1) according to claim 10, **characterized in that** the position sensor (2) and/or the acceleration sensor is/are arranged in the plug-in module (18).

12. Measuring unit (1) according to claim 10 or 11, **characterized in that** the plug-in module (18) has a recognition element for marking the plug-in state, in particular an electrical resistance, a data storage or an RFID chip.

13. Measuring unit (1) according to any one of claims 10 to 12, **characterized in that** the measuring unit (1) carries out a method (5) according to any one of claims 1 to 9 during operation.

## Revendications

1. Procédé (5) pour faire fonctionner une unité de mesure (1), dans lequel l'unité de mesure (1) comporte au moins une unité à capteur destinée à mesurer au moins un paramètre, au moins un capteur de position (2) et/ou un capteur d'accélération et au moins une unité de commande et d'évaluation (3), dans lequel le capteur de position et/ou le capteur d'accélération sont reliés à l'unité de commande et d'évaluation (3) et dans lequel le capteur de position (2) envoie un signal de position et/ou le capteur d'accélération envoie un signal d'accélération à l'unité de commande et d'évaluation (3), dans lequel au moins un processus lié au fonctionnement de l'unité de mesure (1) est déclenché (11) lorsqu'au moins une partie de l'unité de mesure (1) est bougée (10) selon un premier motif de mouvement, dans lequel le premier motif de mouvement comprend une séquence d'au moins deux mouvements et dans lequel au moins un sous-processus du processus ou d'un processus est déclenché (13) lorsqu'au moins une partie de l'unité de mesure (1) est bougée (12) selon un second motif de mouvement, dans lequel le second motif de mouvement comprend au moins un mouvement et dans lequel l'unité de mesure (1) comporte une interface (17) destinée à recevoir un module enfichable (18), et un module enfichable (18), dans lequel le module enfichable (18) comporte un élément de reconnaissance destiné à reconnaître l'état d'enfichage, dans lequel l'unité de commande et d'évaluation (3) n'est sensible aux signaux de position et/ou aux signaux d'accélération que lorsque l'état d'enfichage a été reconnu.

2. Procédé (5) selon la revendication 1, **caractérisé en ce que** l'unité de mesure (1) est amenée par au moins un mouvement à passer dans un état dans lequel l'unité de commande et d'évaluation (3) surveille d'autres signaux de position et/ou d'accélération.

3. Procédé (5) selon l'une des revendications 1 ou 2, **caractérisé en ce qu'**un mouvement d'au moins une partie de l'unité de mesure (1) est effectué par un tremblement (6), une vibration, une rotation, de préférence d'un angle de 90° et/ou de 180° (7) et/ou de 270°, ou un pivotement.

4. Procédé (5) selon l'une des revendications 1 à 3, **caractérisé en ce que** le processus déclenché par le premier motif de mouvement est une routine d'étalonnage de l'unité à capteur.

5. Procédé (5) selon l'une des revendications 1 à 4, **caractérisé en ce que** le capteur de position et/ou le capteur d'accélération est disposé dans le module enfichable (18).

6. Procédé (5) selon l'une des revendications 1 à 5, **caractérisé en ce que** le module enfichable (18) comporte une résistance électrique, une mémoire de données ou une puce RFID en tant qu'élément de reconnaissance destiné à caractériser l'état d'enfichage.

7. Procédé (5) selon la revendication 5 ou 6, **caractérisé en ce qu'**au moins un processus comprenant au moins un sous-processus est déclenché en insérant le module enfichable (18) dans l'interface (17), et **en ce qu'**au moins un sous-processus est déclenché en déplaçant au moins une partie de l'unité de mesure (1) selon un second motif de mouvement.

8. Procédé (5) selon l'une des revendications 1 à 7, **caractérisé en ce que** l'unité de mesure (1), en particulier l'unité à capteur, délivre un signal de rétroaction, en particulier un signal optique et/ou acoustique et/ou de vibration, lorsqu'un processus et/ou un sous-processus est déclenché et/ou interrompu.

9. Procédé (5) selon l'une des revendications 1 à 8, **caractérisé en ce qu'**une pluralité de signaux de position et/ou de signaux d'accélération est stockée dans l'unité de commande et d'évaluation (3), dans lequel un premier nombre de signaux de position et/ou de signaux d'accélération sont des signaux de comparaison pour des séquences de mouvement selon le premier motif de déplacement et dans lequel un second nombre de signaux de position et/ou de signaux d'accélération sont des signaux de comparaison pour des déplacements selon le second motif de déplacement, dans lequel un processus ou un sous-processus est associé à chaque signal de comparaison, dans lequel le signal de position envoyé par le capteur de position (2) et/ou le signal d'accélération envoyé par le capteur d'accélération sont comparés aux signaux de comparaison enregistrés dans l'unité de commande et d'évaluation (3), et dans lequel un processus ou un sous-processus est déclenché dans l'unité de mesure (1) sur la base de ladite comparaison.

10. Unité de mesure (1), comprenant au moins une unité à capteur destinée à mesurer au moins un paramètre, au moins un capteur de position (2) et/ou un capteur d'accélération et au moins une unité de commande et d'évaluation (3), dans lequel le capteur de position (2) et/ou le capteur d'accélération sont reliés à l'unité de commande et d'évaluation (3), dans lequel l'unité de commande et d'évaluation (3) est conçue de telle sorte que, si au moins une partie de l'unité de mesure (1) est bougée selon un premier motif de mouvement, l'unité de commande et d'évaluation (3) déclenche un processus, et en ce que, si au moins une partie de l'unité de mesure (1) est bougée selon un second motif de déplacement, l'unité de commande et d'évaluation (3) déclenche un sous-processus, dans lequel l'unité de mesure (1) comporte une interface (17) destinée à recevoir un module enfichable (18), et un module enfichable (18), dans lequel l'unité de commande et d'évaluation (3) évalue si le module enfichable (18) est inséré dans l'interface (17) et n'évalue le signal de position et/ou le signal d'accélération que lorsque l'état du module enfichable a été reconnu et dans lequel le module enfichable (18) comporte un élément de reconnaissance destiné à reconnaître l'état d'enfichage.

11. Unité de mesure (1) selon la revendication 10, **caractérisée en ce que** le capteur de position (2) et/ou le capteur d'accélération est ou sont disposé(s) dans le module enfichable (18).

12. Unité de mesure (1) selon la revendication 10 ou 11, **caractérisée en ce que** le module enfichable (18) comporte une résistance électrique, une mémoire de données ou une puce RFID en tant qu'élément de reconnaissance destiné à caractériser l'état d'enfichage.

13. Unité de mesure (1) selon l'une des revendications 10 à 12, **caractérisée en ce que** l'unité de mesure (1), lors de son fonctionnement, met en œuvre un procédé (5) selon l'une des revendications 1 à 9.
